## Europäisches Patentamt
## European Patent Office
## Office européen des brevets

(11) Publication number: **0 039 607**
**B1**

(12)

# EUROPEAN PATENT SPECIFICATION

(45) Date of publication of patent specification: **14.12.88**

(51) Int. Cl.⁴: **B 60 T 8/32**

(21) Application number: **81301956.9**

(22) Date of filing: **01.05.81**

(54) **Improved apparatus for generating a lead signal in an antiskid system.**

<table>
<tr><td>

(30) Priority: **05.05.80 US 146614**
**05.05.80 US 146615**

(43) Date of publication of application:
**11.11.81 Bulletin 81/45**

(45) Publication of the grant of the patent:
**14.12.88 Bulletin 88/50**

(84) Designated Contracting States:
**DE FR GB**

(56) References cited:
**FR-A-2 377 305**
**GB-A-2 026 637**
**US-A-3 724 916**
**US-A-3 727 992**
**US-A-3 889 128**
**US-A-3 951 466**
**US-A-3 988 599**
**US-E- 30 209**

</td><td>

(73) Proprietor: **CRANE CO.**
**300 Park Avenue**
**New York New York 10022 (US)**

(72) Inventor: **Cook, Robert D.**
**25408 Avenida Escalera**
**Valencia California 91355 (US)**
Inventor: **Skarvada, Thomas**
**22216 Victory Boulevard**
**Woodland Hills California 91367 (US)**

(74) Representative: **Eyles, Christopher Thomas et al**
**BATCHELLOR, KIRK & EYLES 2 Pear Tree Court**
**Farringdon Road**
**London, EC1R 0DS (GB)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# EP 0 039 607 B1

**Description**

This invention relates to an improved lead network in an antiskid braking system.

Antiskid systems have in the past been provided with lead networks to improve braking efficiency. Such lead networks are responsive to a time derivative of a signal and act to anticipate behaviour of the braked wheel. For example, in response to a sharply decelerating wheel, a lead network acts to reduce brake pressure and to arrest the wheel deceleration and prevent wheel skids.

The present invention is directed to an improved apparatus for generating a lead signal in an antiskid system.

U.S. 4,180,223 (Amberg) shows a limited slip brake control system which generates the wheel speed signal W1 that is differentiated in the circuit 120 to generate a wheel acceleration signal on line 121. Circuits 124 and 130 are reponsive to this wheel acceleration signal. However, circuit 126 differentiates the wheel acceleration signal to generate a signal on line 193 which is a function of the second time derivative of the wheel signal. The signal on line 193 is thus a higher order time derivative of the wheel velocity signal than the signals generated by blocks 124, 130. However, it should be noted that the gain of circuit 194 is a fixed gain K1, as discussed at column 17, lines 12—30.

This means that the gain of the lead signal is fixed whatever the prevailing braking conditions.

Accordingly the present invention provides an antiskid system including a wheel adapted to contact a support surface, a brake coupled to the wheel, means for generating a wheel signal indicative of wheel rotation, circuit means responsive to the wheel signal, for generating a modulator output signal which is a time integral function of the difference between the wheel signal and a reference signal, and means responsive to the output signal for reducing braking action of the brake (US—A—4180223) characterised by:

means for generating a signal indicative of a time derivative of the angular position of the wheel;

means for generating a gain factor as a function of a first signal which varies with the coefficient of friction between the wheel and the support surface during severe braking such that the gain factor is set at a first, higher gain value in response to a first value of the first signal and the gain factor is set at a second, lower gain value in response to the second value of the first signal, suid first value of the first signal being associated with a greater value of the coefficient of friction than said second value of the first signal;

means for generating a lead signal as a function of the time derivative signal modified by the gain factor; and

means for modifying the output signal of the modulator as a function of the lead signal to provide lead compensation;

said circuit means having a gain independent of said gain factor.

According to a second feature of the invention, the magnitude of the lead signal is reduced when it exceeds a limit value. Preferably, the lead signal is clamped to a maximum value. Clamping the lead signal permits the use of very high lead gains without excessively large lead signals. This feature of the invention, which is particularly useful when lead gain is made variable as a function of the brake control signal, permits the lead signal to respond quickly to incipient wheel skids without overcorrecting the brake control signal.

The invention, together with further objects and attendant advantages, will be best understood by reference to the following detailed description taken in connection with the accompanying drawings.

Figure 1 is a block diagram of a brake control system including an antiskid control system.

Figure 2 is a detailed block diagram of the functional components of the antiskid control system of Figure 1.

Figure 3 is a flow chart of the first order lead portion of the lead network of Figure 2.

Figure 4 is a flow chart of the second order lead portion of the lead network of Figure 2.

Figure 5 is a flow chart of the lead compensation gain routine.

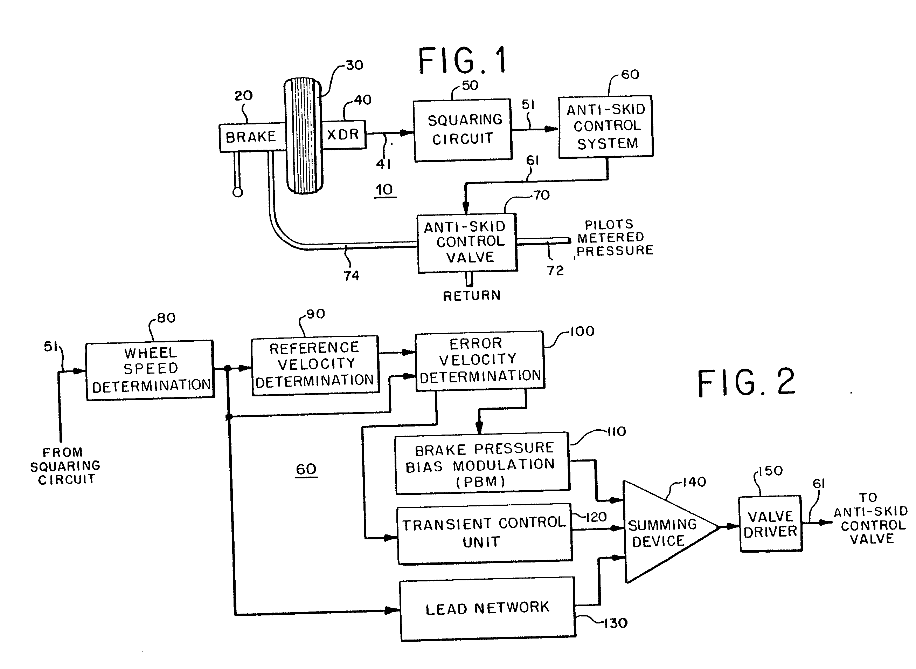

Referring now to the drawings, a preferred embodiment of the improved lead network of the present invention will be described in connection with the brake control system shown in Figures 1 and 2. Figure 1 shows the major components in an antiskid brake control system 10 which provides brake control for the brake 20 of a rotatable wheel 30. The system 10 includes a wheel-speed transducer 40 which produces a sinusoidal signal on line 41 having a frequency proportional to the angular velocity of the wheel 30. The signal on line 41 is shaped in a squaring circuit 50 and is then supplied as a wheel speed signal to an antiskid control system 60 via line 51. The antiskid control 60 monitors the wheel signal on line 51. When the wheel signal indicates that the wheel 50 is about to go into a skid due to excessive braking force, the antiskid system 60 generates a brake control signal on line 61. The antiskid control valve 70 is positioned in the brake line 72 which supplies brake fluid under pressure to the brake 20, and the valve 70 operates in response to the signal on line 61 to reduce the brake pressure applied to the brake 20.

In this preferred embodiment, the brake pressure in line 72 is the metered pressure determined by the vehicle operator by means of conventional hydraulic controls. As long as the wheel 30 is not braked so severely as to go into a skid, the full metered pressure in the line 72 is passed by the valve 70 via the line 74 to the brake 20. However, if the metered brake pressure exceeds the skid threshold and drives the wheel 30 into a skid, the antiskid system 60 will generate a brake control signal on line 61 which causes the valve 70

2

to reduce the pressure in the line 74 to a value less than the metered pressure. By reducing the pressure applied to the brake 30, the braking torque is reduced and the wheel 30 is prevented from skidding.

Figure 2 shows a schematic representation of the antiskid system 60 in Figure 1, including a wheel speed determination unit 80 which uses the wheel signal on line 51 as an input and generates an output signal representative of measured wheel speed. This wheel speed signal is supplied as an input to a reference velocity determination unit 90 for generating a reference velocity signal. This reference velocity signal is applied as an input to an apparatus 100 for determining an error velocity signal representative of the difference between the measured wheel speed signal and the reference velocity signal. The error velocity signal is applied as an input to two separate control units: the brake pressure bias modulation unit, or modulator 110, and the transient control unit 120.

The modulator 110 integrates the error velocity signal over time to arrive at a time averaged, modulated signal representative of the optimum braking pressure. This signal is smoothly and continuously modulated to either increase or decrease the applied brake pressure as needed to substantially prevent excessive wheel skidding while maintaining a high, effective level of braking.

Because the output of the modulator 110 is a time integral function of the error velocity signal, it will on occasion be unable to respond quickly enough to prevent a wheel skid. For example, when a braked wheel suddenly enters a tar strip or an ice patch or a wet surface, the skid threshold will abruptly fall and the modulator 110 may be unable to prevent a deep skid if the wheel 30 is heavily braked. Under these conditions, the transient control unit 120 responds to a large error velocity signal by commanding a sharp and sudden reduction in applied brake pressure.

The wheel speed signal is also applied as an input to a lead network 130 which responds to changes in the wheel speed signal to anticipate trends and to command an early modification in brake pressure to anticipate skids.

Outputs from the modulator 110, the transient control unit 120, and the lead network 130 are summed in a summing device 140 to produce a brake control signal which is amplified by the valve driver 150 and then applied as a control signal via line 61 to the antiskid control valve.

The foregoing description of the brake control system 10 is provided to set forth the environment of a preferred embodiment of the lead network apparatus of this invention. With the exception of the lead network 130, individual components of this environment do not form a part of the present invention, and for that reason will not be described in detail here. Furthermore, those skilled in the art are familiar with various forms of these components. For example, one form of the wheel speed determination unit 80, the error velocity determination unit 100, the modulator 100, and the transient control unit 120 is shown in United States Patent No. 3,724,916, issued April 3, 1973 to Edgar A. Hirzel, and entitled "Controlled Wheel Braking System". Other forms of the wheel speed determination unit 80 are described in United States Patent No. 4,056,287, issued November 1, 1977 to Wolfgang Gudat; and in United States Patent No. 4,125,295, issued November 14, 1978 to Gerhard Ruhnam, et al.

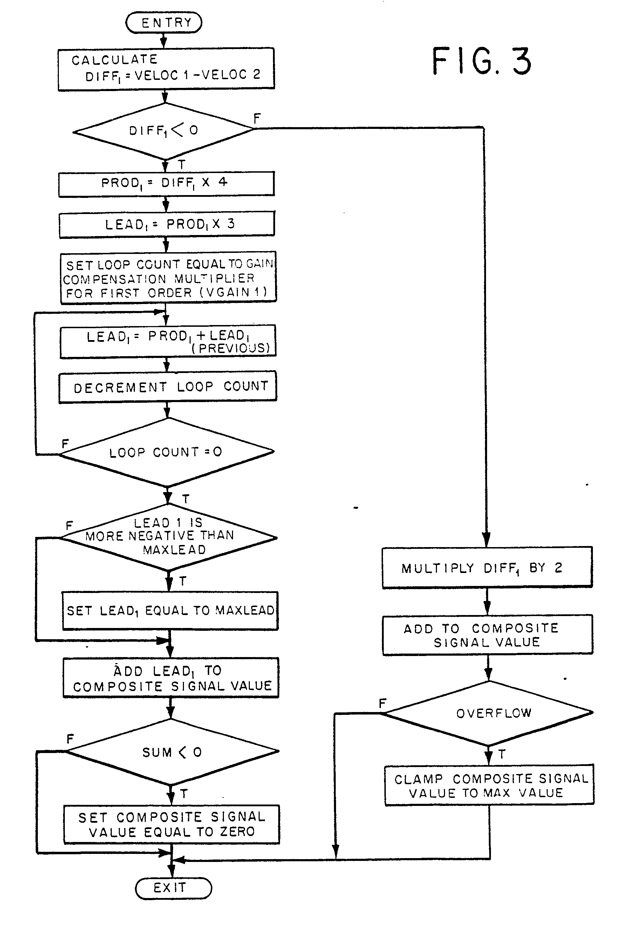

The present invention is directed to an improved lead network for a brake control system. A presently preferred embodiment of this invention, included in lead network 130 of Figure 2, will be described in conjunction with the flow charts of Figures 3—5.

The presently preferred embodiment of this invention is implemented as a programmed microprocessor. The presently preferred microprocessor is a Z-80 CPU manufactured by Zilog, Inc., Cupertino, California. The program is presented in flow chart form in Figures 3—5 and is listed in assembly language form in Tables I—IV.

This program is executed periodically (203 times each second in the preferred embodiment) to determine first and second order lead signals. These lead signals are then added to signals produced by the modulation 110 and the transient control 120, and the sum is used to control the valve driver 150.

As mentioned earlier, the lead network can be used with a wide variety of brake control systems. This preferred embodiment utilizes three dynamic variables generated by the remainder of the brake control system.

First, this preferred embodiment accepts as an input the three most recent measurements of wheel velocity, which are labeled VELOC1, VELOC2, and VELOC3 in the listings. Here, VELOC1 is the most recently measured wheel velocity; VELOC2 is the wheel velocity measured in the last cycle, 1/203 of a second before VELOC1; and VELOC3 is the wheel velocity measured in the next to last cycle, 2/203 of a second before VELOC1.

Second, this embodiment accepts as an input the output signal of the modulator, labeled PBM in the listings. Here, modulator output corresponds generally to the average level of brake pressure applied to the brake 20. Thus, a high modulator output corresponds to a high coefficient of friction between the wheel 30 and the pavement. In practice, the antiskid valve 70 is generally designed to require a large current to bring about a large reduction in brake pressure and therefore the driver 150 is designed to invert the signal from the summing device 140 prior to amplification to obtain the desired relationship between modulator signal and valve control signal.

Third, this embodiment accepts as an input a signal COMPOS, which is related to the sum of the signals produced by the modulator 110 and the transient control unit 120.

Turning now to Figure 3, the first order lead signal is determined as a function of VELOC1, VELOC2, and PBM. In each case, the first order difference of the wheel velocity, DIFF1, is set equal to VELOC2—VELOC2.

The first order lead signal is then set equal to DIFF1 multiplied by a gain factor. The gain factor is not a constant, but instead varies as a function of the algebraic sign of DIFF1 and the magnitude of PBM.

As shown in Figure 3, if VELOC1 is greater than VELOC2, indicating that the wheelspeed is increasing, then the first order lead signal is set equal to two times DIFF1. This signal is then added to the composite signal COMPOS. The result is compared with a maximum value, and clamped to the maximum value if necessary to correct an overflow condition.

On the other hand, if VELOC2 is greater than VELOC1 indicating that wheelspeed is decreasing, then the first order lead signal is set equal to (12+4(VGAIN1))DIFF1, where VGAIN1 is a gain compensation multiplier for first order which will be explained in greater detail below. In addition, the first order lead signal is clamped to a maximum negative value if it is more negative than that value. The clamped first order lead signal is then added to COMPOS, the composite signal, and the result is set equal to zero if negative.

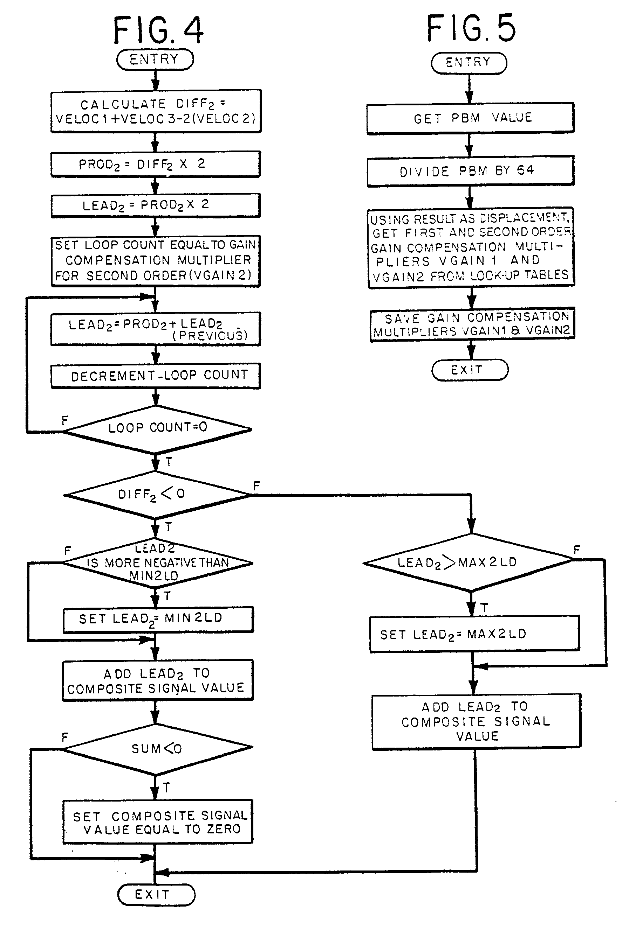

As shown in Figure 5, the gain compensation multiplier for first order, VGAIN1, is determined in accordance with the value of the modulator output signal PBM. PBM is divided by 64 and the quotient is used as a pointer to a lookup table, Table 1. Depending on the value of PBM, the variable VGAIN1 is then set equal to one of the 32 possible values stored in Table 1.

In general, a higher value of PBM corresponds to a higher average brake pressure and a higher value of Mu, the coefficient of friction between the tire and the pavement. In high Mu conditions the wheel can quickly enter a skid due to the high drag levels and the relatively sharp peak of the Mu-slip curve. In computer simulations, it has been found preferable to increase the gain of the lead network during high Mu conditions and to reduce gain of the lead network during low Mu conditions in order to maximize braking efficiency. As shown in Table 4, the preferred embodiment varies VGAIN1 between a low of 2 for low PBM values and a high of 10 for high PBM values.

From the foregoing, it should be apparent that the first order lead network of Figure 3 provides a high degree of flexibility. First, the gain of the lead network is a function of the sign of DIFF1, the difference between VELOC1 and VELOC2. In this preferred embodiment, the gain is set equal to 2 for positive values of DIFF1, corresponding to an accelerating wheel, and to (12+4(VGAIN1)) for negative values of DIFF1, corresponding to a decelerating wheel. By using a higher gain for the first oder lead network for negative rather than positive lead signals, this embodiment acts to reduce brake pressure more quickly than to increase brake pressure. Thus, brake pressure is reduced quickly in the face of wheel deceleration to arrest and reverse impending skids; but brake pressure is increased less quickly in the face of wheel acceleration. In computer simulation, this assymetrical gain for the first order lead network has been found to provide increased braking efficiency.

An additional feature which contributes to flexibility is the variable gain feature. First order lead gain for a decelerating wheel is equal to (12+4(VGAIN1)), and VGAIN1 varies from a low of 2 for low values of PBM (corresponding to wet or icy conditions) to a high of 10 for high values of PBM (corresponding to dry pavement). Thus, first order lead gain for a decelerating wheel is variable between 20 and 52, depending on the actual braking conditions. Of course, the actual values of VGAIN1 as a function of PBM can be chosen as necessary to optimize braking efficiency. This variable gain feature provides an important degree of flexibility that allows the antiskid system to be fine tuned to the the brake system on which it is used. In this preferred embodiment it is only the gain of the lead network that varies as a function of PBM. Other portions of the antiskid system, such as the modulator 110 and the transient control unit 120, do not vary in gain with PBM, as does the lead network.

A third important feature of the embodiment of Figure 3 is the clamp on the magnitude of the lead signal for a decelerating wheel. Because high gains are used in connection with a wheel deceleration in the first order lead network, there is a possibility that a large deceleration could produce an unacceptably large lead signal. In order to avoid this, the lead signal is clamped to a maximum negative value if it goes more negative than the clamp value. One advantage of such a clamp is that it permits the use of high gains without creating excessively large lead signals. Such a clamped high gain lead network can respond quickly and forcefully to small variations in wheel velocity, thereby preventing incipient skids from developing into skids, and yet not introduce excessively large lead signals into the brake control signal.

Figure 4 represents a flow chart for the second order lead network of this embodiment, which calculates the second order difference for the wheel velocity according to the formula DIFF2=VELOC1+VELOC3−2(VELOC2). The second order difference is then multiplied by a gain factor equal to (4+2(VGAIN2)), where VGAIN2 is a variable gain factor generated by the program of Figure 5. In this preferred embodiment, VGAIN2 is determined in the same manner as VGAIN1 except that a separate lookup table, Table 3, is used. VGAIN2 varies between 2 and 10 depending on the value of PBM. Thus, the gain factor for the second order lead ranges between 8 and 24. In contrast to the first order lead of Figure 3, the second order lead of Figure 4 employs the same gain factor for both accelerating and decelerating wheel conditions.

The program then branches, depending on the sign of DIFF2. If DIFF2 is positive, the lead signal is clamped to a greatest positive level and added to the composite signal. If DIFF2 is negative, the lead signal is clamped to a greatest negative level and added to the composite signal.

The second order lead of Figure 4 embodies the variable gain feature and the clamp feature of the first order lead discussed above. Though VGAIN2 is equal to VGAIN1 in this preferred embodiment, it could

4

easily be made to vary with PBM in a manner different from VGAIN1 by altering the contents of the appropriate lookup table.

The programs of Figures 3, 4 and 5 are listed in assembly language form in Tables 1, 2, 3 and 4. Table 1 corresponds to the program of Figure 3; Table 2 corresponds to the program of Figure 4; Table 3 corresponds to the program of Figure 5; and Table 4 lists variables and constants used in the listings of Tables 1, 2 and 3. In order to better understand these listings, it should be understood that the wheel speed measurements stored in VELOC1 through VELOC3 are stored as sixteen bit binary numbers scaled to 0.1 foot per second per least significant bit. Preferably, these velocity measurements are updated 203 times per second, and the programs of Tables 1, 2 and 3 are executed after each update of VELOC1 through VELOC3.

In addition, the variable PBM is directly related to brake pressure and inversely related to valve current. The relationship is linear, scaled such that full scale PBM current (47 milliamps in this embodiment) corresponds to a PBM value of 1280 (hexadecimal) and zero valve current corresponds to a PBM value of 7FFF (hexadecimal). The foregoing examples of specific valve currents are given in terms of valve currents applied to a valve such as the antiskid valve described in U.S. Patent 4,130,322. The constants MAXLEAD, MAX2LD, and MIN2LD are similarly related to valve current, except that the scale factor is chosen such that MAXLEAD corresponds to a valve current reduction of 10.3 mA; MAX2LD corresponds to a valve current reduction of 20.6 mA; and MIN2LD corresponds to a valve current increase of 20.6 mA.

In the preferred embodiment described above the first and second order differences have been used as an approximation of the first and second time derivatives, respectively, of the wheel speed signal. In digital systems it is often preferable to use differences rather than derivatives. However, the novel features of the present invention can also be advantageously used with time derivatives. In the following claims the term time derivative is used in its generic sense and is meant to include approximations of derivatives such as differences.

Of course, it should be understood that various changes and modifications of the preferred embodiment described above will be apparent to those skilled in the art. For example, gains and clamp values can be changed and other antiskid systems, such as acceleration based systems, can be substituted for the velocity based antiskid system shown. In addition, it may be preferable to implement this invention in analog form in some applications. Modifications can be made within the scope of the following claims.

TABLE 1

```
;
;                    FIRST ORDER LEAD
;                    ********************
;
LEAD1X      LD DE, (VELOC2)
            LD H, (VELOC1)
            XOR A
            SBC HL, DE
            JR NC, LEAD1A
            ADD HL,HL
            ADD HL,HL
            LD D,H
            LD E,L
            ADD HL,HL
            ADD HL,DE
            LD B,(IY+VGAIN1—RAM); GET MULTIPLIER FOR GAIN COMPENSATION
LEAD1C      ADD HL,DE
            DJNZ LEAD1C
            LD A,MAXLEAD; CLAMP IF LEAD IS TOO BIG
            CP H
            JR C,LEAD1D
            LD HL,MAXLEAD*256
LEAD1D      LD BC,(COMPOS); GET COMPOSITE SIGNAL VALUE
            ADD HL,BC
            JR C,LEAD1B
            LD HL,0
            JR LEAD1B
LEAD1A      LD D,H
            LD E,L
            ADD HL,DE
            LD BC,(COMPOS)
            ADD HL,BC
            JR NC,LEAD1B
            LD HL,OFFFH
LEAD1B      LD B,H
            LD C,L
            RET
```

TABLE II

```
;
;                       SECOND ORDER LEAD
;                       ********************
;
LEAD2X          LD HL,(VELOC1); GET NEW VELOCITY
                LD DE,(VELOC3); GET OLD VELOCITY
                ADD HL,DE
                LD DE,(VELOC2)
                XOR A; CLEAR CARRY
                SBC HL,DE
                XOR A
                SBC HL,DE
                PUSH AF; SAVE FLAGS
                ADD HL,HL
                LD D,H
                LD E,L
                ADD HL,HL
                PUSH BC
                LD B,(IY+VGAIN2-RAM)
LEAD2B          ADD HL,DE
                DJNZ LEAD2B
                POP BC
                POP AF
                JR C,LEAD2A
                LD A,MAX2LD; CLAMP VALUE
                CP H
                JR NC,LEAD2C; SKIP IF LESS
                LD HL,MAX2LD*256
LEAD2C          ADD HL,BC
                JR LEAD2E
LEAD2A          LD A,MIN2LD, MINIMUM CLAMP
                CP H
                JR C,LEAD2D
                LD HL,MIN2LD*256
LEAD2D          ADD HL,BC
                JR C,LEAD2E
                LD HL,0
LEAD2E          RET
```

TABLE III

```
;
;                       LEAD GAIN COMPENSATION
;                       **************************
. ;
TORQX           LD DE,(PBM)
                SRL D
                SRL D
                LD HL,TABLE1
                LD E,D
                LD D,0
                ADD HL,DE
                LD A,(HL)
                LD (VGAIN1),A
                LD HL,TABLE3
                ADD HL,DE
                LD A,(HL)
                LD (VGAIN2),A
                RET

;
```

TABLE IV

```
;
;                     FIRST ORDER LEAD
;                     VARIABLE GAIN
;                     LOOKUP TABLE
;                     ****************
;
;
;
TABLE 1        BYTE 2,2,2,2,2,3,3,3,4,4,4,4
               BYTE 5,5,5,5,8,8,8,8,10,10,10,10,10
               BYTE 10,10,10,10,10,10,10
;
;
;                     SECOND ORDER LEAD
;                     VARIABLE GAIN
;                     LOOKUP TABLE
;                     ********************
;
;
;
TABLE 3        BYTE 2,2,2,2,2,3,3,3,4,4,4,4
               BYTE 5,5,5,5,8,8,8,8,10,10,10,10
               BYTE 10,10,10,10,10,10,10,10
;
;
;                     GENERAL CONSTANTS
;                     ********************
;
;
;
MAXLEAD EQU OFDH; CLAMP FOR LEAD VALUE (10 MA PRESS REDUCTION)
MAX2LD         EQU 6; MAX CLAMP FOR 2ND LEAD (21 MA)
MIN2LD         EQU −6; MIN CLAMP FOR 2ND LEAD (−21 MA)
;
;
;                     RAM
;                     *****
;
;
VELOC1         EQU 82OH; NEW VELOCITY
VELOC2         EQU 822H; PREVIOUS VELOCITY (ONE LOOP TIME BACK)
VELOC3         EQU 824H; PREVIOUS VELOCITY (TWO LOOP TIMES BACK)
VGAIN1         EQU 817H; FIRST ORDER GAIN COMPENSATION MULTIPLIER
VGAIN2         EQU 81DH; SECOND ORDER GAIN COMPENSATION MULTIPLIER
RAM            EQU 800H; BEGINNING OF RAM
PBM            EQU 80AH; PBM VALUE (TWO BYTES)
COMPOS         EQU 812H; COMPOSITE VALUE (TWO BYTES)
;
```

**Claims**

1. An antiskid system including a wheel (10) adapted to contact a support surface, a brake (20) coupled to the wheel, means (80) for generating a wheel signal indicative of wheel rotation, circuit means (110) responsive to the wheel signal, for generating a modulator output signal which is a time integral function of the difference between the wheel signal and a reference signal, and means (150, 70) responsive to the output signal for reducing brake action of the brake, characterised by:

means (130) for generating a signal indicative of a time derivative of the angular position of the wheel;

means (130) for generating a gain factor as a function of a first signal which varies with the coefficient of friction between the wheel and the support surface during severe braking such that the gain factor is set at a first, higher gain value in response to a first value of the first signal and the gain factor is set at a second, lower gain value in response to the second value of the first signal, said first value of the first signal being associated with a greater value of the coefficient of friction than said second value of the first signal;

means (130) for generating a lead signal as a function of the time derivative signal modified by the gain factor; and

means (140) for modifying the output signal of the modulator as a function of the lead signal to provide lead compensation;

said circuit means (110) having a gain independent of said gain factor.

8

# EP 0 039 607 B1

2. An antiskid system according to claim 1 wherein the ratio between the second gain value and the first gain value is about one to five.

3. An antiskid system according to claim 1 further comprising:
means for reducing the magnitude of the lead signal when the magnitude of the lead signal exceeds the magnitude of a limit value and the algebraic sign of the lead signal corresponds to the algebraic sign of the limit value.

4. An antiskid system according to claim 3 wherein the reducing means comprises means for clamping the magnitude of the lead signal to a clamp value when the magnitude of the lead signal exceeds the magnitude of the clamp value and the algebraic sign of the lead signal corresponds to the algebraic sign of the clamp value.

5. An antiskid system according to any preceding claim wherein the wheel signal is indicative of the angular velocity of the wheel and wherein the time derivative signal is indicative of a time derivative of the angular velocity of the wheel.

6. An antiskid system according to claim 5 wherein the time derivative signal is indicative of the first time derivative of the angular velocity of the wheel.

7. An antiskid system according to any preceding claim wherein the first signal is indicative of the amplitude of the output signal.

8. An antiskid system as claimed in claim 7 wherein the means for generating a gain factor comprises:
a computer;
means, included in the computer, for storing a look up table which includes the first and second gain values; and
means, included in the computer, for selectively retrieving one of the first and second gain values from the look up table in response to the amplitude of the output signal.

9. An antiskid system according to any preceding claim wherein the circuit means (110) generates the output signal as a time integral function of the velocity of the wheel.

**Patentansprüche**

1. Antiblockiersystem mit einem Rad (10), das dazu eingerichtet ist, eine Stützfläche zu berühren, einer Bremse (20), die mit dem Rad verbunden ist, einer Einrichtung (80) zum Erzeugen eines Radsignals, das für die Raddrehung kennzeichnend ist, einer Schaltungsanordnung (110), die auf das Radsignal anspricht, um ein Modulationsausgangssignal zu erzeugen, das eine Zeitintegralfunktion des Unterschiedes zwischen dem Radsignal und einem Bezugssignal ist, und einer Einrichtung (150, 70), die auf das Ausgangssignal anspricht, um die Bremswirkung der Bremse zu vermindern, gekennzeichnet durch:
eine Einrichtung (130) zum Erzeugen eines Signals, das für eine Zeitableitung der Winkelposition des Rades kennzeichnend ist;
eine Einrichtung (130) zum Erzeugen eines Verstärkungsfaktors als eine Funktion eines ersten Signals, das mit dem Reibungskoeffizienten zwischen dem Rad und der Abstützfläche während starken Bremsens variiert, so daß der Verstärkungsfaktor auf einen ersten, höheren Verstärkungswert in Abhängigkeit von einem ersten Wert des ersten Signals gesetzt wird, und der Verstärkungsfaktor auf einen zweiten, niedrigeren Wert in Abhängigkeit von dem zweiten Wert des ersten Signals gesetzt wird, wobei der erste Wert des ersten Signals einem größeren Wert des Reibungskoeffizienten zugeordnet ist, als der zweite Wert des ersten Signals;
eine Einrichtung (130) zum Erzeugen eines Führungssignals als eine Funktion des zeitabgeleiteten Signals, modifiziert durch den Verstärkungsfaktor; und
ein Einrichtung (140) zum Modifizieren des Ausgangssignals des Modulators als eine Funktion des Führungssignals, um eine Führungskompensation zu erzeugen;
wobei die Schaltungsanordnung (110) eine von dem Verstärkungsfaktor unabhängige Verstärkung hat.

2. Antiblockiersystem nach Anspruch 1, bei dem das Verhältnis zwischen dem zweiten Verstärkungswert und dem ersten Verstärkungswert ungefähr 1:5 begrägt.

3. Antiblockiersystem nach Anspruch 1, weitherhin enthaltend:
eine Einrichtung zur Verminderung der Größe des Führungssignals, wenn die Größe des Führungssignals die Größe eines gegebenen Wertes überschreitet und das algebraische Vorzeichen des Führungssignals dem algebraischen Verzeichen des Grenzwerts entspricht.

4. Antiblockiersystem nach Anspruch 3, bei dem die Herabsetzungseinrichtung eine Einrichtung zum Klemmen der Größe des Führungssignals auf einen Klemmwert enthält, wenn die Größe des Führungssignals die Größe des Klemmwertes überschreitet und das algebraische Vorzeichen des Führungssignals dem algebraischen Vorzeichen des Klemmwertes entspricht.

5. Antiblockiersystem nach einem der vorhergehenden Ansprüche, bei dem das Radsignal für die Winkelgeschwindigkeit des Rades kennzeichnend ist und das Zeitableitsignal für eine Zeitableitung der Winkelgeschwindigkeit des Rades kennzeichnend ist.

6. Antiblockiersystem nach Anspruch 5, bei dem das Zeitableitsignal für die erste Zeitableitung der Winkelgeschwindigkeit des Rades kennzeichnend ist.

7. Antiblockiersystem nach einem der vorhergehenden Ansprüche, bei dem das erste Signal für die Amplitude des Ausgangssignals kennzeichnend ist.

9

8. Antiblockiersystem nach Anspruch 7, bei dem die Einrichtung zur Erzeugung eines Verstärkungsfaktors enthält:

einen Rechner;

eine in dem Rechner enthaltene Einrichtung zum Speichern einer Nachschlagetabelle, die die ersten und zweiten Verstärkungswerte enthält; und

eine in dem Rechner enthaltene Einrichtung zum wahlweisen Auffinden einer der ersten und zweiten Verstärkungswerte aus der Nachschlagetabelle in Abhängigkeit von der Amplitude des Ausgangssignals.

9. Antiblockiersystem nach einem der vorhergehenden Ansprüche, bei dem die Schaltungsanordnung (110) das Ausgangssignal als eine Zeitintegralfunktion der Geschwindigkeit des Rades erzeugt.

## Revendications

1. Système anti-patinage comportant une roue (10) agencée pour être en contact avec une surface support, un frein (20) accouplé avec la roue, un dispositif (80) qui produit un signal de roue indiquant une rotation de la roue, un circuit (110) réagissant au signal de roue en produisant un signal de sortie de modulateur qui est une fonction intégrale par rapport au temps de la différence entre le signal de roue et un signal de référence et un dispositif (150, 70) réagissant au signal de sortie en réduisant l'action de freinage du frein, caractérisé par:

un dispositif (130) qui produit un signal indiquant une dérivée par rapport au temps de la position angulaire de la roue;

un dispositif (130) qui produit un facteur de gain en fonction d'un premier signal qui varie avec le coëfficient de frottement entre la roue et la surface support pendant un freinage sévère, de manière que le facteur de gain soit réglé à une première valeur de gain supérieure en réponse à une première valeur du premier signal et que le facteur soit réglé à une seconde valeur de gain inférieure en réponse à la seconde valeur du premier signal, ladite première valeur du premier signal étant associée avec une valeur plus élevée du coëfficient de frottement que ladite seconde valeur du premier signal;

un dispositif (130) qui produit un signal de commande en fonction du signal de dérivée par rapport au temps modifié par le facteur de gain; et

un dispositif (140) qui modifie le signal de sortie du modulateur en fonction du signal de commande pour produire une compensation de commande;

ledit circuit (110) ayant un gain indépendant dudit facteur de gain.

2. Système anti-patinage selon la revendication 1, dans lequel le rapport entre la seconde valeur de gain et la première valeur de gain est d'environ un à cinq.

3. Système anti-patinage selon la revendication 1, comportant en outre:

un dispositif qui réduit l'amplitude du signal de commande quand l'amplitude du signal de commande dépasse l'amplitude d'une valeur limite et le signe algébrique du signal de commande correspond au signe algébrique de la valeur limite.

4. Système anti-patinage selon la revendication 3, dans lequel le dispositif de réduction comporte un dispositif qui écrète l'amplitude du signal de commande à une valeur d'écrétage quand l'amplitude du signal de commande dépasse l'amplitude de la valeur d'écrétage et que le signe algébrique du signal de commande correspond au signe algébrique de la valeur d'écrétage.

5. Système anti-patinage selon l'une quelconque des revendications précédentes, dans lequel le signal de roue indique la vitesse angulaire de la roue et dans lequel le signal de dérivée par rapport au temps indique une dérivée par rapport au temps de la vitesse angulaire de la roue.

6. Système anti-patinage selon la revendication 5, dans lequel le signal de dérivée par rapport au temps indique la dérivée première par rapport au temps de la vitesse angulaire de la roue.

7. Système anti-patinage selon l'une quelconque des revendications précédentes, dans lequel le premier signal indique l'amplitude du signal de sortie.

8. Système anti-patinage selon la revendication 7, dans lequel le dispositif qui produit un facteur de gain comporte:

un calculateur;

un dispositif, inclus dans le calculateur, pour mémoriser une table à consultation qui contient les premières et les secondes valeurs de gain; et

un dispositif, inclus dans le calculateur, pour retrouver sélectivement l'une des premières et des secondes valeurs de gain dans la table à consultation en réponse à l'amplitude du signal de sortie.

9. Système anti-patinage selon l'une quelconque des revendications précédentes, dans lequel le circuit (110) produit le signal de sortie comme une fonction intégrale par rapport au temps de la vitesse de la roue.

# FIG.1

# FIG.2

EP 0 039 607 B1

# FIG. 3

ENTRY

CALCULATE
$DIFF_I$ = VELOC 1 - VELOC 2

$DIFF_I < 0$

F →

T

$PROD_I = DIFF_I \times 4$

$LEAD_I = PROD_I \times 3$

SET LOOP COUNT EQUAL TO GAIN
COMPENSATION MULTIPLIER
FOR FIRST ORDER (VGAIN 1)

$LEAD_I = PROD_I + LEAD_I$
(PREVIOUS)

DECREMENT LOOP COUNT

F ← LOOP COUNT = 0

T

F ← LEAD 1 IS
MORE NEGATIVE THAN
MAXLEAD

T

SET $LEAD_1$ EQUAL TO MAXLEAD

ADD $LEAD_1$ TO
COMPOSITE SIGNAL VALUE

F ← SUM < 0

T

SET COMPOSITE SIGNAL
VALUE EQUAL TO ZERO

MULTIPLY $DIFF_1$ BY 2

ADD TO COMPOSITE
SIGNAL VALUE

F ← OVERFLOW

T

CLAMP COMPOSITE SIGNAL
VALUE TO MAX VALUE

EXIT

2

## EP 0 039 607 B1

# FIG.4

( ENTRY )

CALCULATE $DIFF_2$ = $VELOC1 + VELOC3 - 2(VELOC2)$

$PROD_2 = DIFF_2 \times 2$

$LEAD_2 = PROD_2 \times 2$

SET LOOP COUNT EQUAL TO GAIN COMPENSATION MULTIPLIER FOR SECOND ORDER ($VGAIN2$)

$LEAD_2 = PROD_2 + LEAD_2$ (PREVIOUS)

DECREMENT - LOOP COUNT

LOOP COUNT = 0     F / T

$DIFF_2 < 0$     T / F

$LEAD2$ IS MORE NEGATIVE THAN $MIN2LD$     F / T

SET $LEAD_2 = MIN2LD$

ADD $LEAD_2$ TO COMPOSITE SIGNAL VALUE

$SUM < 0$     F / T

SET COMPOSITE SIGNAL VALUE EQUAL TO ZERO

$LEAD_2 > MAX2LD$     F / T

SET $LEAD_2 = MAX2LD$

ADD $LEAD_2$ TO COMPOSITE SIGNAL VALUE

( EXIT )

# FIG.5

( ENTRY )

GET PBM VALUE

DIVIDE PBM BY 64

USING RESULT AS DISPLACEMENT, GET FIRST AND SECOND ORDER GAIN COMPENSATION MULTI- PLIERS $VGAIN1$ AND $VGAIN2$ FROM LOOK-UP TABLES

SAVE GAIN COMPENSATION MULTIPLIERS $VGAIN1$ & $VGAIN2$

( EXIT )

3